# EUROPEAN PATENT SPECIFICATION

(11) **EP 2 204 036 B1**
(45) Date of publication and mention of the grant of the patent: **03.04.2013**
(21) Application number: 07822105.8
(22) Date of filing: 31.10.2007
(51) Int. Cl.: H04L 29/06

(54) **SESSION INITIATION PROTOCOL MESSAGE PAYLOAD COMPRESSION**
NACHRICHTENNUTZINFORMATIONSKOMPRIMIERUNG BEIM SESSION INITIATION PROTOCOL
COMPRESSION DE CHARGE UTILE DE MESSAGE SIP

(43) Date of publication of application: 07.07.2010
(73) Proprietor: Telefonaktiebolaget LM Ericsson (publ), 164 83 Stockholm (SE)
(72) Inventor: BOBERG, Christer, S-137 55 Tungelsta (SE); LINDGREN, Anders, S-125 74 Älvsjö (SE)
(74) Representative: Lind, Robert
(86) International application number: PCT/EP2007/061758
(87) International publication number: WO 2009/056171

(56) References cited:
- A. KULKARNI ET AL.: INTERNET ARTICLE, [Online] 25 July 2001 (2001-07-25), pages 1-4, XP002494874 Retrieved from the Internet: URL:http://www.ietf.org/mail-archive/web/r ohc/old-archive/msg02279.html> [retrieved on 2008-09-08]
- LONNFORS J COSTA-REQUENA E LEPPANEN NOKIA H KHARTABIL M: "Session Initiation Protocol (SIP) extension for Partial Notification of Presence Information; draft-ietf-simple-partial-notify-09.txt" IETF STANDARD-WORKING-DRAFT, INTERNET ENGINEERING TASK FORCE, IETF, CH, vol. simple, no. 9, 26 February 2007 (2007-02-26), pages 1-15, XP015049828 ISSN: 0000-0004
- NIEMI M LONNFORS E LEPPANEN NOKIA A: "Publication of Partial Presence Information; draft-ietf-simple-partial-publish-06.txt" IETF STANDARD-WORKING-DRAFT, INTERNET ENGINEERING TASK FORCE, IETF, CH, vol. simple, no. 6, 6 February 2007 (2007-02-06), pages 1-14, XP015049829 ISSN: 0000-0004
- GARCIA-MARTIN NOKIA SIEMENS NETWORKS M: "The Presence-Specific Static Dictionary for Signaling Compression (Sigcomp); draft-garcia-simple-presence-dictionary-06 .txt" IETF STANDARD-WORKING-DRAFT, INTERNET ENGINEERING TASK FORCE, IETF, CH, no. 6, 2 August 2007 (2007-08-02), pages 1-23, XP015050950 ISSN: 0000-0004

## Description

### Technical Field

The present invention relates to the compression of the payloads of Session Initiation Protocol messages.

### Background

IP Multimedia services provide a dynamic combination of voice, video, messaging, data, etc. within the same session. By growing the number of basic applications and the media which it is possible to combine, the number of services offered to the end subscribers will grow, and the inter-personal communication experience will be enriched. This will lead to a new generation of personalised, rich multimedia communication services, including so-called "combinational IP Multimedia" services.

IP Multimedia Subsystem (IMS) is the technology defined by the Third Generation Partnership Project (3GPP) and ETSI TISPAN group to provide IP Multimedia services over mobile communication networks (3GPP TS 22.228, TS 23.228, TS 24.229, TS 29.228, TS 29.229, TS 29.328 and TS 29.329 Releases 5 to 7, and TS24.173 Release 7). IMS provides key features to enrich the end-subscriber person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between subscriber terminals (or subscriber terminals and application servers). The Session Description Protocol (SDP), carried by SIP signalling, is used to describe and negotiate the media components of the session. Whilst SIP was created as a subscriber-to-subscriber protocol, IMS allows operators and service providers to control subscriber access to services and to charge subscribers accordingly.

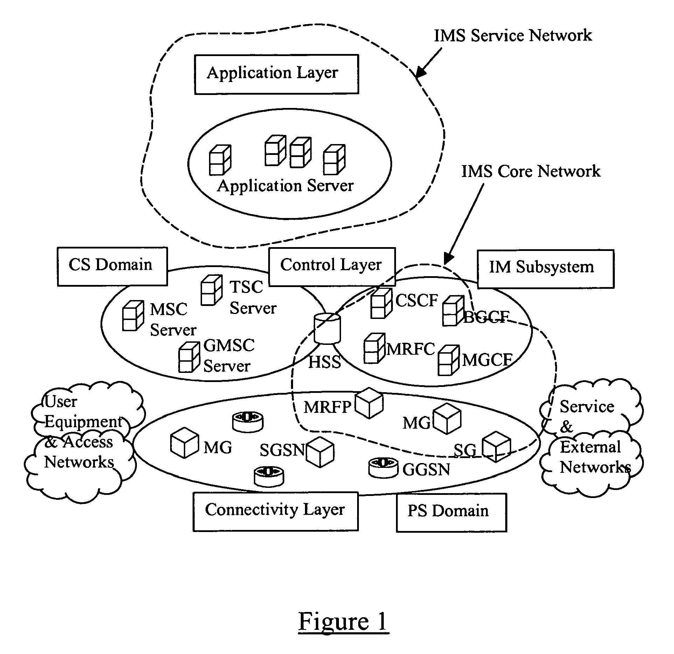

By way of example, Figure 1 illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the subscriber that the subscriber is subscribed to; and the Interrogating CSCF (I-CSCF) whose role is to identify the correct S-CSCF and to forward to that S-CSCF a request received from a SIP terminal via a P-CSCF.

Within the IMS service network, Application Servers (ASs) are provided for implementing IMS service functionality. Application Servers provide services to end users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment (or indeed for the purpose of any SIP method, session or non-session related). The IFCs are received by the S-CSCF from an HSS during the IMS registration procedure as part of a subscriber's Subscriber Profile.

An example IMS service that is facilitated by the use of ASs is that of "presence". A presence service allows users to disseminate their current availability and location to others, and involves the use of a presence AS within the IMS. A user updates his/her presence status with the presence AS, using the SIP PUBLISH method, and the presence AS then issues SIP NOTIFY messages to peer users who have subscribed to that user' presence. Subscription involves a user sending a SIP SUBSCRIBE message to the presence AS, identifying the user whose presence is being subscribed to. In order to reduce the volume of presence related traffic flowing in the IMS network, a so-called Resource List Server (RLS) AS may be introduced. The RLS acts as a "concentrator" for NOTIFY messages directed to a given user, buffering NOTIFY messages received over some predefined time period, and sending only a single combined NOTIFY message to the subscribing user at the end of that period. The RLS AS also acts as a "middleman" for SUBSCRIBE messages received from a user.

It is appreciated that NOTIFY messages can be very large, with payloads exceeding 64kbytes. Other SIP messages can be equally large. As such, it is desirable to be able to compress messages to reduce network load. Moreover, compression of messages can improve the overall latency since large messages sent over the air interface (and in the network) may have to be split into several smaller messages.

WO2006/030277 describes a method and apparatus for compressing SIP protocol messages based upon a technique known as SIGCOMP (IEEE RFCs 3320 and 3321). The approach described involves examining message type and content and selectively compressing all or parts of the header and payload in order to leave those message components which must be readable by intermediate network nodes in clear text.

SIGCOMP itself includes both static and dynamic libraries and, within the IMS, is implemented in the IMS terminal and in the P-CSCF. The static library contains pre-defined entries for compressing and decompressing specific messages and message parts. This has two limitations. Firstly, the amount of compression/translation information that the static library can contain may be limited in the end-user terminal due to available memory. Secondly, adding new compression entities to the static library requires changes both the client and the server side. The dynamic library makes use of previous messages to compress and decompress messages. Whilst the use of a dynamic library will achieve a good compression ratio where messages including similar data, if the data changes a lot from message to message, which it will in a multi-service environment, the compression ratio will be low.

Regardless of the compression ratios achieved by SIGCOMP based approaches, SIGCOMP is not yet widely deployed (and static libraries will require ongoing standardisation) and as such there will exist for some time to come a large number of terminals that do not have the latest SIGCOMP support or no SIGCOMP support at all. If for example an IMS presence application is developed for such legacy equipment, the associated SIP message must be transported uncompressed. This problem is also applicable for other types of SIP notifications, e.g. notifications done using the XCAP change event package.

The publication, A. Kulkarni et al.: 25 July 2001, pages 1 to 4, http://www.ietf.org/mail-archive/web/rohc/old-archive/msg02279.html, proposes an end-to-end compression of SIP messages, using gzip.

### Summary

According to a first aspect of the present invention there is provided a method of transporting Session Initiation Protocol NOTIFY messages across an IP Multimedia network between a user terminal and a Session Initiation Protocol Application Server, the method comprising compressing the NOTIFY message payloads within the application layer at the sending side and decompressing them at the application layer on the receiving side, compressed NOTIFY message payloads being passed between the application layer and a Session Initiation Protocol User Agent via an appropriate Application Programming Interface, characterised in that, at the user terminal, the application layer writes into a header of a SIP SUBSCRIBE message to be sent to the Session Initiation Protocol Application Server, an indication that payload compression is supported by the user terminal.

By facilitating payload compression and decompression outside of the SIP User Agent, embodiments of the present invention can be implemented with user terminals that do not have the latest SIP protocols installed, e.g. SIGCOMP compatibility is not required.

According to a preferred embodiment of the invention, the SIP message headers are sent uncompressed so that the messages can be routed through any intermediate CSCFs and Application Servers without requiring decompression and recompression at these nodes.

It is desirable to make use of a well known and readily available algorithm for compressing and decompressing payloads. For example, the gzip algorithm (an abbreviation of GNU zip) may be used.

Preferably, said indication is included in the Accept or Accept-Encoding header field of the SUBSCRIBE message. More preferably still, the method comprises writing the Accept or Accept-Encoding header field to the Session Initiation Protocol User Agent from said application layer via said Application Programming Interface.

In the case of a presence service, said Session Initiation Protocol Application Server may be a Resource List Server.

According to a second aspect of the present invention there is provided a user terminal configured to operate within an IP Multimedia Subsystem service network, the user terminal implementing one or more application layers communicating with a Session Initiation Protocol User Agent, the application layer or layers communicating with the Session Initiation Protocol User Agent via an Application Programming Interface, the user terminal being further configured to receive SIP NOTIFY messages at the Session Initiation Protocol User Agent, to pass these to the application layer or layers via said Application Programming Interface, and to decompress the payloads of incoming SIP NOTIFY messages at the application layer or layers, the application layer or layers being configured to write into a header of a SIP SUBSCRIBE message to be sent to a Session Initiation Protocol Application Server, an indication that payload compression is supported by the user terminal.

According to a third aspect of the present invention there is provided a Session Initiation Protocol Application Server configured to operate within an IP Multimedia Subsystem service network, the Application Server implementing one or more application layers communicating with a Session Initiation Protocol User Agent, the application layer or layers communicating with the Session Initiation Protocol via an Application Programming Interface, the Application Server being further configured to compress the payloads of outgoing SIP NOTIFY messages at the application layer or layers and to exchange the compressed payloads with the Session Initiation Protocol User Agent via said Application Programming Interface, the server being further configured to receive from a user terminal a SIP SUBSCRIBE message, to identify within a header of that message an indication that payload compression is supported by the user terminal, and to initiate payload compression of NOTIFY messages sent to that user terminal.

### Brief Description of the Drawings

Figure 1 illustrates schematically the integration of an IP Multimedia Subsystem into a 3G mobile communications system;
Figure 2 illustrates schematically a functional architecture for implementing compression of SIP messages within the IMS; and
Figure 3 is a flow diagram illustrating a procedure for compressing SIP messages.

### Detailed Description

As has already been discussed, a number of different SIP messages used within the IP Multimedia Subsystem (IMS) may include a very large amount of payload data. Such messages include for example SIP Notification (e.g. for presence, RLS and XCAP changes) and SIP publications (e.g. for presence). It would be beneficial to use a compression mechanism to reduce the size of the message, particularly to optimise usage of the air interface band width.

Moreover, in order to allow compression to be used with legacy terminals that do not utilise SIGCOMP (or at least SIGCOMP with the latest static compression libraries), it is desirable to facilitate compression at the application layer, above the SIP layer.

It is proposed here to introduce a compression/decompression procedure at the application layer for compressing/decompressing only the payloads of messages and which makes use of a commonly used compression algorithm such as "gzip". Gzip is based upon the DEFLATE algorithm, which is a combination of LZ77 and Huffman coding. As an alternative to gzip, the well known zip compression format may be used.

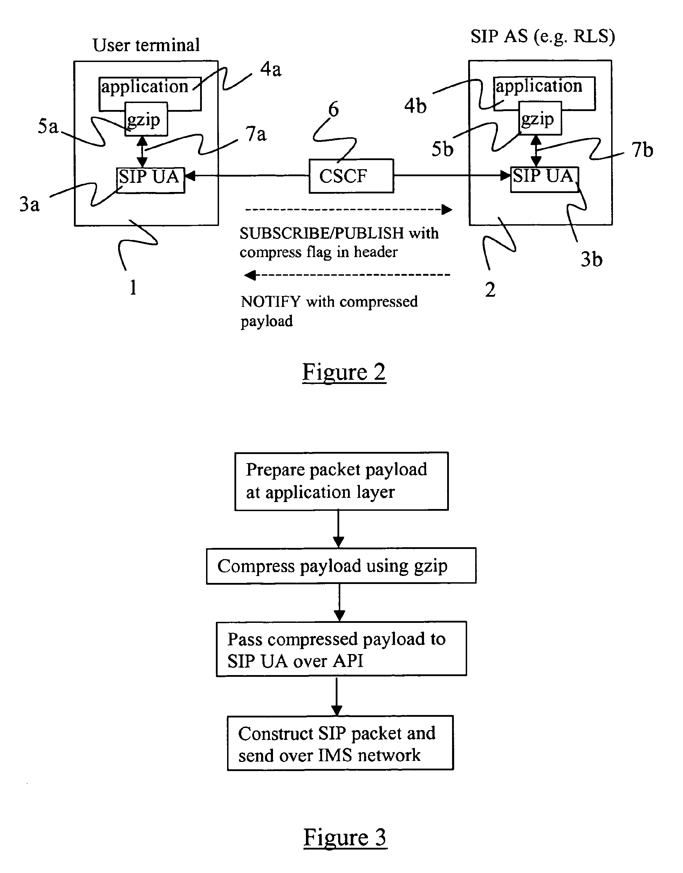

Compression is not performed on the SIP message headers and, as such, any SIP proxy through which a message passes will not be affected since the actual SIP information is not compressed. This is illustrated in Figure 2, where the user terminal is indicated by reference numeral 1, the (presence) AS or RLS by reference numeral 2, the respective SIP UAs by 3a,3b, and the respective application layers by 4a,4b. The gzip functions are indicated by reference numerals 5a,5b. An exemplary CSCF is indicated by reference numeral 6.

At least in some embodiments of the present invention, the compression/decompression processes are completely transparent to the SIP User Agents (at either the user terminal or the SIP Application Server). The relevant application merely exchanges payload data with the SIP UA via the appropriate SIP UA Application Programming Interface (API), and the SIP UA does not care if the data is compressed or not. [Respective APIs are indicated in Figure 2 by reference numerals 7a,7b.] This procedure is illustrated in the flow diagram of Figure 3. However, in other embodiments it may be desirable to allow a user terminal to indicate, for example, in an initial SIP SUBSCRIBE message, that it supports a compressed payload in SIP NOTIFY messages. This could be done for example by allowing the application to write an appropriate statement into the SIP message header. For example, the existing "Accept" or "Accept-Encoding" header fields could be used for this purpose, or a new SIP header field may be specified. Assuming that the notifier (e.g. presence AS) also supports compression it will compress the payloads of all SIP NOTIFY messages sent to the subscriber and relating to the event subscribed to. An indication that a payload is compressed may be contained within the message header, e.g. using the "Content-Type" header field, of the PUBLISH and NOTIFY messages.

Compression may be employed in particular at a Resource List Server (RLS) as the payload sent from an RLS towards the user terminals often contains a large amount of data that is the same syntax and for which compression, using for example gzip, will be very efficient.

It will be appreciated by the person of skill in the art that various modifications may be made to the above described embodiment without departing from the scope of the present invention. For example, it is possible to additionally implement compression/decompression of SIP message headers within the SIP layer. However, this could be optional, dependent upon the SIP protocol version implemented at the client terminal (or SIP AS) and in any case may be undesirable as it may restrict the ability of SIP messages to pass through intermediate nodes without additional processing.

## Claims

1. A method of transporting Session Initiation Protocol NOTIFY messages across an IP Multimedia network between a user terminal (1) and a Session Initiation Protocol Application Server (2), the method comprising compressin the NOTIFY message payloads within the application layer at the sending side (46) and decompressing them at the application layer on the receiving side (4a), compressed NOTIFY message payloads being passed between the application layer (4a, 4b) and a Session Initiation Protocol User Agent (3a, 2b) via an appropriate Application Programming Interface (7a, 7b), wherein,
at the user terminal, the application layer writes into a header of a SIP SUBSCRIBE message to be sent to the Session Initiation Protocol Application Server, an indication that payload compression is supported by the user terminal.

2. A method according to claim 1, the message headers being sent uncompressed so that the messages can be routed through any intermediate CSCFs and Application Servers.

3. A method according to claim 1 or 2, said compressing and decompressing of message payloads being carried out using gzip.

4. A method according to any one of the preceding claims and comprising including said indication in the Accept or Accept-Encoding header field of the SUBSCRIBE message.

5. A method according to claim 4 and comprising writing the Accept or Accept-Encoding header field to the Session Initiation Protocol User Agent from said application layer via said Application Programming Interface.

6. A method according to any one of the preceding claims, wherein said SUBSCRIBE and NOTIFY messages relate to a presence service.

7. A method according to any one of the preceding claims, wherein said Session Initiation Protocol Application Server is a Resource List Server.

8. A user terminal (1) configured to operate within an IP Multimedia Subsystem service network, the user terminal implementing one or more application layers (4a) communicating with a Session Initiation Protocol User Agent (3a), the application layer or layers communicating with the Session Initiation Protocol User Agent via an Application Programming Interface (7a), the user terminal being further configured to receive SIP NOTIFY messages at the Session Initiation Protocol User Agent, to pass these to the application layer or layers via said Application Programming Interface, and to decompress the payloads of incoming SIP NOTIFY messages at the application layer or layers, the application layer or layers being configured to write into a header of a SIP SUBSCRIBE message to be sent to a Session Initiation Protocol Application Server, an indication that payload compression is supported by the user terminal.

9. A Session Initiation Protocol Application Server (2) configured to operate within an IP Multimedia Subsystem service network, the Application Server implementing one or more application layers (4b) communicating with a Session Initiation Protocol User Agent (3b), the application layer or layers communicating with the Session Initiation Protocol user agent (3b) via an Application Programming Interface (7b), the Application Server being further configured to compress the payloads of outgoing SIP NOTIFY messages at the application layer or layers and to exchange the compressed payloads with the Session Initiation Protocol User Agent via said Application Programming Interface, the server being further configured to receive from a user terminal a SIP SUBSCRIBE message, to identify within a header of that message an indication that payload compression is supported by the user terminal, and to initiate payload compression of NOTIFY messages sent to that user terminal.

## Patentansprüche

1. Verfahren zum Transportieren von SIP(Sitzungsinitiierungsprotokoll)-NOTIFY-Nachrichten durch ein IP-Multimedianetz zwischen einem Benutzerendgerät (1) und einem SIP-Anwendungsserver (2), wobei das Verfahren umfasst, dass die NOTIFY-Nachrichten-Payloads innerhalb der Anwendungsschicht auf der Sendeseite (4b) komprimiert werden und an der Anwendungsschicht auf der Empfangsseite (4a) dekomprimiert werden, wobei komprimierte NOTIFY-Nachrichten-Payloads zwischen der Anwendungsschicht (4a, 4b) und einem SIP-Benutzeragenten (3a, 3b) über eine geeignete Anwendungsprogrammier-Schnittstelle (7a, 7b) weitergeleitet werden, worin
die Anwendungsschicht am Benutzerendgerät in einen Header einer an den SIP-Anwendungsserver zu sendenden SIP-SUBSCRIBE-Nachricht eine Anzeige schreibt, dass die Payload-Komprimierung vom Benutzerendgerät unterstützt wird.

2. Verfahren nach Anspruch 1, wobei die Nachrichtenheader unkomprimiert gesendet werden, sodass die Nachrichten durch jegliche Zwischen-CSCFs(Rufsitzungs-Steuerungsfunktionen) und Anwendungsserver geroutet werden können.

3. Verfahren nach Anspruch 1 oder 2, wobei das Komprimieren und Dekomprimieren von Nachrichten-Payloads unter Verwendung von gzip ausgeführt wird.

4. Verfahren nach einem der vorhergehenden Ansprüche und umfassend, dass die Anzeige in das Annahme- oder Annahme-Codier-Headerfeld der SUBSCRIBE-Nachricht eingeschlossen wird.

5. Verfahren nach Anspruch 4 und umfassend, dass das Annahme- oder Annahme-Codier-Headerfeld an den SIP-Benutzeragenten von der Anwendungsschicht über die Anwendungsprogrammier-Schnittstelle geschrieben wird.

6. Verfahren nach einem der vorhergehenden Ansprüche, worin die SUBSCRIBE- und NOTIFY-Nachrichten einen Anwesenheitsdienst betreffen.

7. Verfahren nach einem der vorhergehenden Ansprüche, worin der SIP-Anwendungsserver ein Ressourcenlistenserver ist.

8. Benutzerendgerät (1), konfiguriert, um innerhalb eines IP-Multimediasubsystem-Dienstnetzes zu arbeiten, wobei das Benutzerendgerät eine oder mehrere Anwendungsschichten (4a) implementiert, die mit einem SIP-Benutzeragenten (3a) kommunizieren, wobei die Anwendungsschicht oder -schichten mit dem SIP-Benutzeragenten über eine Anwendungsprogrammier-Schnittstelle (7a) kommunizieren, wobei das Benutzerendgerät außerdem dazu konfiguriert ist, SIP-NOTIFY-Nachrichten am SIP-Benutzeragenten zu empfangen, diese an die Anwendungsschicht oder -schichten über die Anwendungsprogrammier-Schnittstelle weiterzuleiten und die Payloads von eingehenden SIP-NOTIFY-Nachrichten an der Anwendungsschicht oder den -schichten zu dekomprimieren, wobei die Anwendungsschicht oder -schichten dazu konfiguriert sind, in einen Header einer an den SIP-Anwendungsserver zu sendenden SIP-SUBCRIBE-Nachricht eine Anzeige zu schreiben, dass Payload-Komprimierung vom Benutzerendgerät unterstützt wird.

9. SIP-Anwendungsserver (2), konfiguriert, um innerhalb eines IP-Multimediasubsystem-Dienstnetzes zu arbeiten, wobei der Anwendungsserver eine oder mehrere Anwendungsschichten (4b) implementiert, die mit einem SIP-Benutzeragenten (3b) kommunizieren, wobei die Anwendungsschicht oder -schichten mit dem SIP-Benutzeragenten (3b) über eine Anwendungsprogrammier-Schnittstelle (7b) kommunizieren, wobei der Anwendungsserver außerdem dazu konfiguriert ist, die Payloads der abgehenden SIP-NOTIFY-Nachrichten an der Anwendungsschicht oder den -schichten zu komprimieren und die komprimierten Payloads mit dem SIP-Benutzeragenten über die Anwendungsprogrammier-Schnittstelle auszutauschen, wobei der Server außerdem dazu konfiguriert ist, von einem Benutzerendgerät eine SIP-SUBSCRIBE-Nachricht zu empfangen, innerhalb eines Headers dieser Nachricht eine Anzeige zu identifizieren, dass Payload-Komprimierung vom Benutzerendgerät unterstützt wird, und Payload-Komprimierung von an das Benutzerendgerät gesendeten NOTIFY-Nachrichten zu initiieren.

## Revendications

1. Procédé d'acheminement de messages de notification « NOTIFY » de protocole d'ouverture de session à travers un réseau multimédia IP entre un terminal d'utilisateur (1) et un serveur d'applications de protocole d'ouverture de session (2), le procédé comprenant la compression des charges utiles de message de notification « NOTIFY » dans la couche d'application du côté transmission (4b) et leur décompression au niveau de la couche d'application du côté réception (4a), les charges utiles de message de notification « NOTIFY » compressées transitant entre la couche d'application (4a, 4b) et un agent utilisateur de protocole d'ouverture de session (3a, 3b) par l'intermédiaire d'une interface de programmation d'application pertinente (7a, 7b), dans lequel
au niveau du terminal d'utilisateur, la couche d'application écrit, dans un en-tête d'un message de souscription de protocole SIP « SIP SUBSCRIBE » à envoyer au serveur d'applications de protocole d'ouverture de session, une indication selon laquelle la compression de charges utiles est prise en charge par le terminal d'utilisateur.

2. Procédé selon la revendication 1, dans lequel les en-têtes de message sont envoyés non compressés, de sorte que les messages peuvent être acheminés par le biais de quelconques serveurs d'applications et fonctions CSCF intermédiaires.

3. Procédé selon la revendication 1 ou 2, dans lequel ladite compression et ladite décompression de charges utiles de message sont mises en oeuvre au moyen de l'utilitaire gzip.

4. Procédé selon l'une quelconque des revendications précédentes, comprenant l'inclusion de ladite indication de la champ d'en-tête d'acceptation « Accept » ou d'acceptation de codage « Accept-Encoding » du message de souscription « SUBSCRIBE ».

5. Procédé selon la revendication 4, comprenant l'écriture du champ d'en-tête d'acceptation « Accept » ou d'acceptation de codage « Accept-Encoding » sur l'agent utilisateur de protocole d'ouverture de session à partir de ladite couche d'application, par l'intermédiaire de ladite interface de programmation d'application.

6. Procédé selon l'une quelconque des revendications précédentes, dans lequel lesdits messages de notification « NOTIFY » et de souscription « SUBSCRIBE » sont connexes à un service de présence.

7. Procédé selon l'une quelconque des revendications précédentes, dans lequel ledit serveur d'applications de protocole d'ouverture de session est un serveur de listes de ressources.

8. Terminal d'utilisateur (1) configuré de manière à opérer dans un réseau de service de sous-système multimédia IP, le terminal d'utilisateur mettant en oeuvre une ou plusieurs couches d'application (4a) communiquant avec un agent utilisateur de protocole d'ouverture de session (3a), la couche ou les couches d'application communiquant avec l'agent utilisateur de protocole d'ouverture de session via une interface de programmation d'application (7a), le terminal d'utilisateur étant en outre configuré de manière à recevoir des messages de notification de protocole SIP « SIP NOTIFY » au niveau de l'agent utilisateur de protocole d'ouverture de session, à les transmettre à la couche ou aux couches d'application par l'intermédiaire de ladite interface de programmation d'application, et à décompresser les charges utiles de messages de notification de protocole SIP « SIP NOTIFY » entrants, au niveau de la couche ou des couches d'application, la couche ou les couches d'application étant configurées de manière à écrire, dans un en-tête d'un message de souscription de protocole SIP « SIP SUBSCRIBE » à envoyer à un serveur d'applications de protocole d'ouverture de session, une indication selon laquelle la compression de charges utiles est prise en charge par le terminal d'utilisateur.

9. Serveur d'applications de protocole d'ouverture de session (2) configuré de manière à opérer dans un réseau de service de sous-système multimédia IP, le serveur d'applications mettant en oeuvre une ou plusieurs couches d'application (4b) communiquant avec un agent utilisateur de protocole d'ouverture de session (3b), la couche ou les couches d'application communiquant avec l'agent utilisateur de protocole d'ouverture de session (3b) par l'intermédiaire d'une interface de programmation d'application (7b), le serveur d'applications étant en outre configuré de manière à compresser les charges utiles de messages de notification de protocole SIP « SIP NOTIFY » sortants, au niveau de la couche ou des couches d'application, et à échanger les charges utiles compressées avec l'agent utilisateur de protocole d'ouverture de session par l'intermédiaire de ladite interface de programmation d'application, le serveur étant en outre configuré de manière à recevoir, à partir d'un terminal d'utilisateur, un message de souscription de protocole SIP « SIP SUBSCRIBE », à identifier, dans un en-tête de ce message, une indication selon laquelle la compression de charges utiles est prise en charge par le terminal d'utilisateur, et à initier une compression de charges utiles de messages de notification « NOTIFY » envoyés à ce terminal d'utilisateur.
